# EUROPÄISCHE PATENTSCHRIFT

(11) **EP 1 727 728 B1**
(45) Veröffentlichungstag und Bekanntmachung des Hinweises auf die Patenterteilung: **02.01.2008**
(21) Anmeldenummer: 05715954.3
(22) Anmeldetag: 11.03.2005
(51) Int. Cl.: B62K 23/04, B62K 11/14

(54) **BEDIENELEMENT**
CONTROL ELEMENT
ELEMENT DE COMMANDE

(30) Priorität: 26.03.2004 DE 102004014888
(43) Veröffentlichungstag der Anmeldung: 06.12.2006
(73) Patentinhaber: Bayerische Motorenwerke Aktiengesellschaft, 80809 München (DE)
(72) Erfinder: GEIGER, Michael, 80807 München (DE)
(86) Internationale Anmeldenummer: PCT/EP2005/002582
(87) Internationale Veröffentlichungsnummer: WO 2005/092698

(56) Entgegenhaltungen:
- EP-A- 1 216 911
- DE-A1- 19 702 788

## Beschreibung

Die vorliegende Erfindung betrifft ein Bedienelement für ein mit einer Lenkstange lenkbares Fahrzeug, insbesondere Motorrad gemäß dem Oberbegriff des Patentanspruches 1.

Ein derartiges Bedienelement zeigt die DE 197 02 788 A1 für ein Motorrad. Das Bedienelement besteht aus einer Schalthülse, die drehbar auf der Lenkstange im Bereich des linken Handgriffs lagert. Mit der Schalthülse lassen sich die einzelnen Gänge des Motorradgetriebes schalten. Hierfür kann der Fahrer die Schalthülse in beiden Richtungen innerhalb eines bestimmen Winkelbereichs verdrehen. Für das Ansteuern weiterer Fahrzeugfunktionen ist die Schalthülse nicht vorgesehen.

In zunehmendem Maße werden derartige, mit einer Lenkstange lenkbaren Fahrzeuge, also in erster Linie Motorräder, mit Audio- bzw. Hifi-Geräten oder Navigationseinrichtungen usw. ausgerüstet. Die Bedienung dieser Geräte wirft aber Probleme auf. Die entsprechenden Bedienelemente sollten zum einen in Griffnähe des Fahrers sein, so dass er zum Betätigen aus Gründen der Verkehrssicherheit den Handgriff nicht loszulassen braucht. Zum anderen aber ist an dieser Stelle meist kein Platz für voluminöse Bedienelemente.

Aufgabe der Erfindung ist es, ein Bedienelement darzustellen, mit dem eine Reihe von Funktionen angesteuert werden können.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung sieht demnach einen drehbaren Betätigungsring vor, der nicht nur um die Achse des Handgriffs verdrehbar ist, sondern wenigstens einen weiteren Freiheitsgrad aufweist. Auf diese Weise ist er multifunktional ausgelegt.

Zweckmäßigerweise besteht der weitere Freiheitsgrad in einem begrenzten Verschieben der Betätigungsring in Längsrichtung des Handgriffs. Dabei kann nur eine Verschieberichtung vorgegeben sein. Eine größere Funktionsfreiheit ermöglicht aber eine Verschiebemöglichkeit in beide Richtungen.

Alternativ oder ergänzend zu der Verschiebemöglichkeit sieht eine vorteilhafte Ausgestaltung der Erfindung auch ein Drücken des Betätigungsrings in radialer Richtung vor. Dadurch lässt sich bspw. eine Eingabe oder eine Funktion bestätigen, die zuvor durch Verdrehen ausgewählt wurde.

Häufig weisen Lenkstangen derartiger Fahrzeug im Bereich der Handgriffe Abschlussmanschetten auf, die dem Fahrer einen sicheren Griff vermitteln. In einer zweckmäßigen Ausgestaltung der Erfindung befindet sich der Betätigungsring auf der Abschlussmanschette, die zur Lenker- bzw. Fahrzeugmitte zeigt. Damit benötigt der Betätigungsring keinen zusätzlichen Bauraum und ist dennoch in unmittelbarer Griffnähe des Fahrers. Der Fahrer kann mit seinem Daumen und gegebenenfalls Zeigfinger den Ring betätigen, ohne die Hand vom Handgriff zu nehmen. Damit hat er auch während des Betätigen die vollständige Kontrolle über das Fahrzeug, was letztlich der Verkehrssicherheit dient. Darüber hinaus ist diese Anordnung ausgesprochen benutzerfreundlich.

Um die Benutzerfreundlichkeit noch zu erhöhen, sieht die Erfindung in einer weiteren vorteilhaften Ausgestaltung deutlich spürbare Raststufen vor, in denen der Betätigungsring verdreht werden kann. Damit bekommt der Fahrer auch bei grobmotorischer Bedienung, als auch bspw. mit Handschuhen, eine klare Rückmeldung über den Verstellweg bei der Drehbetätigung.

Ebenfalls der Steigerung der Benutzerfreundlichkeit dienen über den Umfang des Betätigungsrings in gleichmäßigen Abständen verteilte Griffmulden.

Die Erfindung eignet sich für alle Fahrzeuge, die über eine Lenkstange gelenkt werden, das heißt sowohl für zweirädrige Einspurfahrzeuge wie Motorräder also auch für drei- oder mehrrädrige Fahrzeuge.

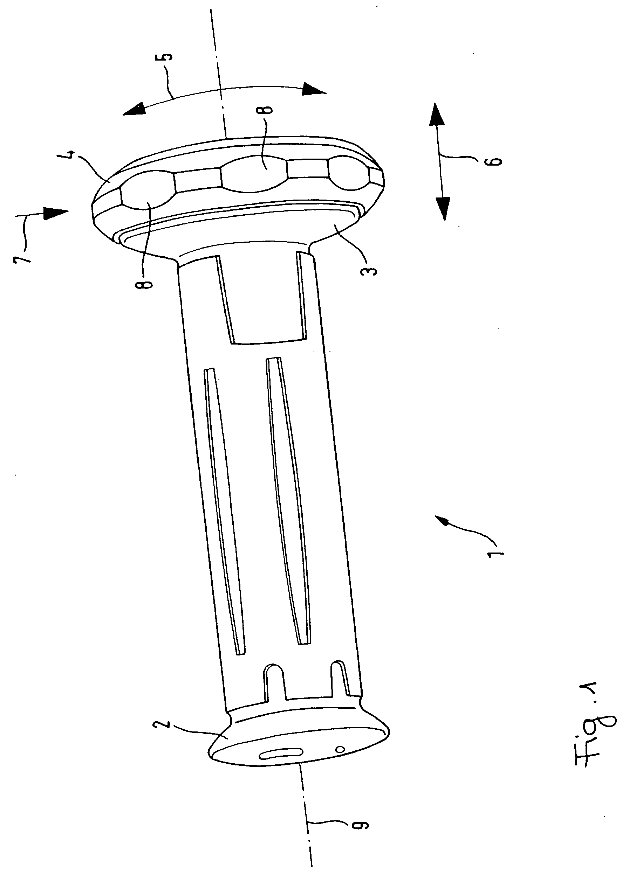

Weitere vorteilhafte Ausgestaltungen der Erfindung ergeben sich aus der folgenden Beschreibung eines Ausführungsbeispieles im Zusammenhang mit der Zeichnung.

Die Zeichnung zeigt in der einzigen Figur einen linken Handgriff 1, der auf das Ende einer nicht näher dargestellten Lenkstange aufgeschoben und befestigt ist. Die Lenkstange ist in bekannter Weise mit den Radführungsgliedern eines in der Regel vorderen Fahrzeugrades verbunden und leitet durch Verschwenken dieses Fahrzeugrades eine Lenkbewegung des Fahrzeuges ein. In der Regel wird es sich hier um ein Motorrad handeln. Der Handgriff 1 ist beidseitig mit Abschlussmanschetten 2 und 3 begrenzt.

Auf der Abschlussmanschette 3, sie zeigt zur Lenkstangen- bzw. Fahrzeugmitte hin, sitzt ein Betätigungsring 4, der sich in beiden Richtungen verdrehen lässt. Ein Doppelpfeil 5 zeigt die Verdrehmöglichkeiten. Der Betätigungsring 4 lässt sich außerdem in Achsrichtung 9 des Handgriffs 1 hin- und herverschieben. Dies wiederum symbolisiert ein weiterer Doppelpfeil 6. Schließlich kann der Betätigungsring 4 durch Drücken radial versetzt oder verformt werden. Diese Bewegungsrichtung zeigt ein Pfeil 7.

In der Zeichnung ist nicht weiter erkennbar, wie die Verstellung des Betätigungsrings 4 die Einstellung der gewünschten Funktionen bewirkt. Hierfür können in der Abschlussmanschette 3 elektrische Kontakte vorgesehen sein, die beim Verstellen des Betätigungsrings 4 Schaltimpulse an ein nicht weiter dargestelltes elektronisches Steuergerät weiterleiten. In diesem Steuergerät werden die Schaltimpulse verarbeitet und die jeweiligen Fahrzeugfunktionen aufgerufen. So kann beispielsweise durch Verdrehen des Betätigungsrings 4 in Pfeilrichtung 5 die Lautstärke eines Radiogeräts eingestellt werden. Im Falle eines im Fahrzeug eingebauten Navigationsgerät kann andererseits durch Drehen und/oder Verschieben des Betätigungsrings 4 in Menüstrukturen geblättert und durch Drücken in Pfeilrichtung 7 die gewünschte Eingabe oder Einstellung bestätigt werden. Anstelle herkömmlicher elektrischer Kontakte kann die Signalweitergabe auch berührungslos erfolgen. Hierfür können in der Abschlussmanschette 3 Halbleitersensoren, sogenannte "Doppel-Hall-Schalter", eingesetzt sein, die mit im Betätigungsring befindlichen Miniaturmagneten beaufschlagt werden.

Über den Umfang in regelmäßigen Abständen verteilt, sind in den Betätigungsring 4 Griffmulden 8 geformt. Der Fahrer kann durch diese Griffmulden 8 des Betätigungsringes 4 mit seinem Daumen sicher verstellen, auch dann, wenn er einen Handschuh trägt.

## Patentansprüche

1. Bedienelement für ein mit einer Lenkstange lenkbares Fahrzeug, insbesondere Motorrad, mit einem in sich drehbar auf der Lenkstange gelagerten und im Bereich eines Handgriffs der Lenkstange befindlichen Betätigungsring (4), durch dessen Verdrehen Funktionen im Fahrzeug ansteuerbar sind, **dadurch gekennzeichnet, dass** der Betätigungsring (4) neben seiner Verdrehbarkeit mindestens einen weiteren Freiheitsgrad für das Anwählen von Fahrzeugfunktionen aufweist.

2. Bedienelement nach Anspruch 1, **dadurch gekennzeichnet, dass** sich der Betätigungsring (4) in Längsrichtung des Handgrifffs (1) verschieben lässt.

3. Bedienelement nach Anspruch 1 oder 2, **dadurch gekennzeichnet, dass** der Betätigungsring (4) in seiner radialen Richtung betätigbar ist.

4. Bedienelement nach einem der Ansprüche 1 bis 3, **dadurch gekennzeichnet, dass** der Handgriff (1) zur Lenkstangenmitte in eine Abschlussmanschette (3) übergeht und dass der Betätigungsring (4) auf der Abschlussmanschette (3) drehbar gelagert ist.

5. Bedienelement nach einem der Ansprüche 1 bis 4, **dadurch gekennzeichnet, dass** der Betätigungsring (4) in einzelnen Raststufen verdrehbar ist.

6. Bedienelement nach einem der Ansprüche 1 bis 5, **dadurch gekennzeichnet, dass** über den Umfang des Betätigungsrings (4) verteilt Griffmulden (8) ausgeformt sind.

7. Bedienelement nach einem der Ansprüche 1 bis 6, **dadurch gekennzeichnet, dass** über elektrische Signale die Verstellbewegungen des Betätigungsrings (4) weitergeleitet werden.

8. Bedienelement nach Anspruch 7, **dadurch gekennzeichnet, dass** in der Abschlussmanschette (3) elektrische Kontakte untergebracht sind, die vom Betätigungsring (4) bei dessen Verstellung beaufschlagt werden.

9. Bedienelement nach Anspruch 7 oder 8, **dadurch gekennzeichnet, dass** in der Abschlussmanschette (3) Hallsensoren vorgesehen sind, die berührungslos mit im Betätigungsring (4) befindlichen Miniaturmagneten zusammenarbeiten.

## Claims

1. A control element for a vehicle, especially a motorcycle, steerable by a handlebar, comprising an actuating ring (4) rotatably mounted on the handlebar and situated near a handle thereof, the ring being rotated in order to actuate functions in the vehicle, **characterised in that** the actuating ring (4), in addition to being rotatable, has at least one additional degree of freedom for selecting functions of the vehicle.

2. A control element according to claim 1, movable by the actuating ring (4) in the longitudinal direction of the handle (1).

3. A control element according to claim 1 or claim 2, **characterised in that** the ring (4) can be actuated in the radial direction thereof.

4. A control element according to any of claims 1 to 3, **characterised in that** the handle (1), towards the middle of the handlebar, terminates in a collar, and the actuating ring (4) is mounted for rotation on the collar (3).

5. A control element according to any of claims 1 to 4, **characterised in that** the actuating ring (4) is rotatable in individual snap-in stages.

6. A control element according to any of claims 1 to 5, **characterised in that** recessed grips (8) are distributed round the periphery of the actuating ring (4).

7. A control element according to any of claims 1 to 6, **characterised in that** the adjusting movements of the ring (4) are transmitted by electric signals.

8. A control element according to claim 7, **characterised in that** the collar (3) contains electric contacts which are actuated by the ring (4) when adjusted.

9. A control element according to claim 7 or claim 8, **characterised in that** the collar (3) contains Hall probes which co-operate in contact-free manner with miniature magnets in the ring (4).

## Revendications

1. Elément de commande pour un véhicule pouvant être dirigé à l'aide d'un guidon, en particulier pour une motocyclette, comportant un anneau de manoeuvre (4), logé de manière rotative sur le guidon et se trouvant au voisinage d'une manette de celui-ci, anneau dont la rotation permet d'exciter des fonctions dans le véhicule,
**caractérisé en ce que**
l'anneau de manoeuvre (4) présente, outre sa capacité de rotation, au moins un degré de liberté supplémentaire pour la sélection de fonctions du véhicule.

2. Elément de commande selon la revendication 1,
**caractérisé en ce que**
l'anneau de manoeuvre (4) peut être déplacé suivant la direction longitudinale de la manette (1).

3. Elément de commande selon la revendication 1 ou 2,
**caractérisé en ce que**
l'anneau de manoeuvre (4) peut être actionné suivant sa direction radiale.

4. Elément de commande selon l'une des revendications 1 à 3,
**caractérisé en ce que**
la manette (1) se termine, en direction du milieu du guidon, par une manchette de fermeture (3), et l'anneau de manoeuvre (4) est logé de manière rotative sur la manchette de fermeture (3).

5. Elément de commande selon l'une des revendications 1 à 4,
**caractérisé en ce que**
l'on peut faire tourner l'anneau de manoeuvre (4) dans divers paliers d'arrêt.

6. Elément de commande selon l'une des revendications 1 à 5,
**caractérisé en ce que**
des poignées concaves (8), réparties sur le périmètre de l'anneau de manoeuvre (4), sont formées.

7. Elément de commande selon l'une des revendications 1 à 6,
**caractérisé en ce que**
les mouvements de réglage de l'anneau de manoeuvre (4) sont transmis par l'intermédiaire de signaux électriques.

8. Elément de commande selon la revendication 7,
**caractérisé en ce que**
dans la manchette de fermeture (3) sont logés des contacts électriques sollicités par l'anneau de manoeuvre (4) lors du réglage de celui-ci.

9. Elément de commande selon la revendication 7 ou 8,
**caractérisé en ce que**
dans la manchette de fermeture (3) sont prévus des capteurs de Hall qui coopèrent sans contact avec des aimants miniaturisés se trouvent dans l'anneau de manoeuvre (4).
